# EUROPEAN PATENT APPLICATION

(11) **EP 0 618 130 A1**
(43) Date of publication of application: **05.10.1994**
(21) Application number: 94302375.4
(22) Date of filing: 31.03.1994
(51) Int. Cl.: B62D 33/04

(54) **Cargo support decks**

(30) Priority: 01.04.1993 GB 9306810
(71) Applicant: SHORFAST LIMITED, Basildon, Essex, SS14 3JY (GB)
(72) Inventor: Venton-Walters, Roy c/o Shorfast Limited, Essex SS14 3JY (GB)
(74) Representative: Every, David Aidan

(57) **Abstract**

A cargo support deck (7) for a vehicle body (1) has individual deck segments (8) each of which are vertically moveable along a guide track (6). Each deck segment comprises a telescopic beam (9) with end fittings (10) captively connected to the guide track, and a deck panel covered with appropriate flooring material. The beam may be disposed centrally relative to the deck to prevent any significant torsional forces being fed to the telescoping mechanism or end fittings.

## Description

This invention relates to cargo support decks intended for use in the transportation of cargo in rigid box-vans, trucks or other vehicles or containers (for convenience hereinafter referred to as "vehicles").

In known cargo support arrangements a plurality of elongate beams span the width of a vehicle and are releasably fixed in place by means of a suitable fitment at each end of the beam which fitment engages with a supporting structure on a vehicle wall. The beams can be used as a "second deck" system whereby a temporary platform is positioned on the beams to provide for a second deck carrying capacity in addition to that at floor level. Alternatively cargo in suitable form (e.g. large boxes) may be supported directly by the beams without the need for a temporary platform.

It is advantageous if the second deck can be raised or lowered vertically according to the user's requirements and an example of a such a second deck arrangement is described in our pending European Patent Application No. 91308616.1. The arrangement described comprises a plurality of cargo support beams each having end fitments with sliding shoes. Each end of a beam is captively mountable by means of a sliding shoe to a vertical track attached to the vehicle wall. The beam can thus be vertically displaced by means of the shoe sliding relative to the track. A pawl mounted in the shoe is designed to engage in any one of a plurality of apertures along the length of the track to allow the beam to be locked at a predetermined position. The end fitments or shoes are often mounted pivotally to the beam end and each beam has a telescopic arrangement to enable its effective length to be increased. This arrangement reduces the possibility of accidental jamming during vertical movement of the beam and enables one end of the beam to be raised or lowered at a time so that the beam is in a temporary position diagonal to the vertical track with both ends of the beam remaining captive to the track. A plurality of said beams are connected between opposite tracks along the length of the vehicle.

The above described cargo support decks have two main disadvantages.

First, the deck formed comprises a plurality of horizontally spaced beams. The presence of a wide space between adjacent beams requires the cargo to be self supporting whereby the distance between two adjacent beams is spanned by the load or to be pre-packaged into a load which likewise spans adjacent beams e.g. the cargo may be loaded on to a pallet of the appropriate size. It will be appreciated that this second deck design does not lend itself well to loose cargo and may not accommodate differing pallet sizes without using large numbers of beams along the length of the vehicle. Furthermore. it is difficult and unsafe to walk on such a deck and impossible to use any wheeled vehicle thereon such as a pallet trolley or a roll pallet.

Secondly, as a result of the wide spacing between adjacent beams it is difficult to lock a beam to its neighbour to provide a more secure deck. During transportation the vehicle and deck may be subjected to many loads and much deformation. In particular, the above described deck can offer no resistance to shear, side wall deflection or longitudinal torsion of the vehicle in the manner of a unitary full length deck whose presence stiffens the structure of the vehicle.

It is an object of the present invention to obviate or mitigate the aforesaid disadvantages.

According to the present invention there is provided a cargo support deck moveable relative to a supporting structure in a substantially vertical direction characterised in that the deck comprises a plurality of deck segments each comprising a support connected to a deck panel and each being individually moveable along a guide track.

Thus individual deck segments can be vertically aligned to form a complete second deck or alternatively the second deck can be separated into vertically offset segments.

Preferably the deck segment has a sliding shoe connector designed to engage captively said guide track. Each sliding shoe connector is preferably moveable telescopically with respect to the deck segment. This allows one end of a deck to be raised or lowered at a time with both ends remaining captive to the guide track.

Preferably the support is a beam mounted centrally on the longitudinal axis of the deck panel. The central mounting of the panel prevents any significant torsional forces form being transmitted to the telescoping arrangement and the sliding shoe connector. There may be provided a supplementary beam designed to support said deck segment at an edge thereof remote from the central longitudinal axis, the supplementary beam being vertically moveable along a guide track.

Alternatively the beam is formed at a first edge of the deck panel so that when adjacent first and second deck segments are vertically aligned a second edge of the first deck segment opposite said first edge is supported by part of said beam of a second adjacent deck segment.

Preferably the beam is separable from the deck panel so that alternative panels can be used according to the nature of the cargo.

The beam may be housed in an aperture through the length of the deck segment.

Conveniently the sliding shoe may have torsional reaction bearings.

In a preferred embodiment means are provided to interlock adjacent deck segments when they are in vertical alignment.

Specific embodiments of the present invention will now be described, by way of example, with reference to the accompanying drawings, in which:
Fig. 1 is a part cut away plan view of a cargo support deck according to the present invention;
Fig. 2 is a side elevation of the support deck of figure 1;
Fig. 3 is a schematic cross sectioned side view of deck segments as part of the present invention;
Fig. 4 is a schematic cross sectioned side view of a second embodiment of the deck segments;
Fig. 5 is a schematic cross sectioned side view of a third embodiment of the deck segments;
Fig. 6 is a schematic cross sectioned side view of a fourth embodiment of the deck segments;
Fig. 7 is a schematic part cross sectioned side view of a torsional reactance device used in a preferred embodiment of the present invention; and
Fig. 8 is a part cut away plan view of an embodiment of the cargo support deck with interlocking devices.

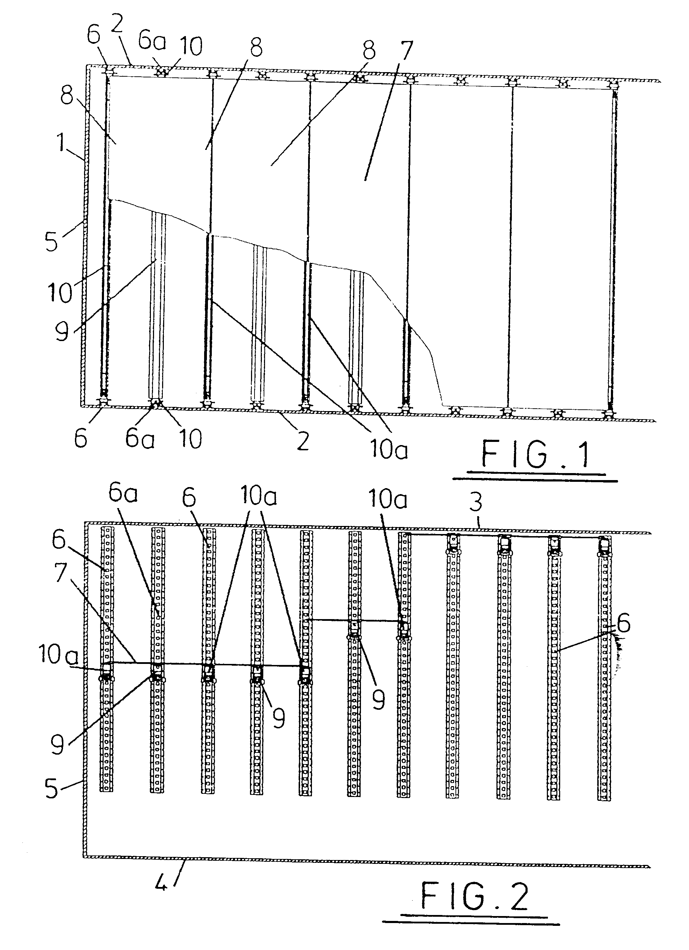

Referring to the figures 1 and 2, there is shown a vehicle body 1 with parallel side walls 2, roof 3, floor 4 and an end wall 5. Each side wall 2 is fitted with a plurality of vertically disposed parallel guide tracks 6 which are spaced along the length of the vehicle body 1.

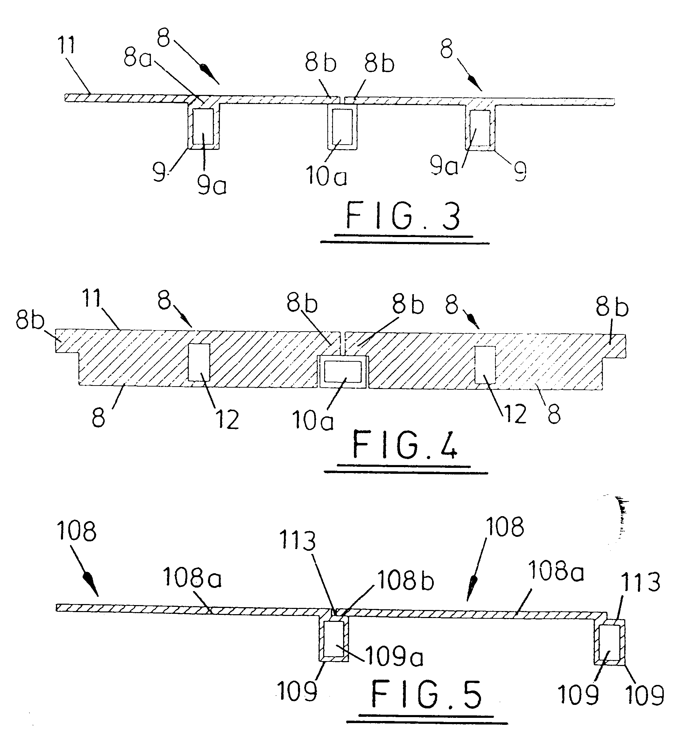

Mounted on the guide tracks above floor level is a secondary deck 7 comprising a plurality of deck segments 8. Each deck segment (shown in detail in figure 3) comprises a panel 8a and a central supporting beam 9 of hollow square cross section. The beam 9 is positioned on the longitudinal axis of the deck segment 8 and is integral with or separably connected to the underside of panel 8a. Each beam 9 is telescopic and has pivotal end fitments 10 including sliding shoes captively mounted to the guide track as described in our European Patent Application No. 91308616. Each deck segment 8 is thus able to slide vertically with respect to the vehicle body I and can be latched in any vertical position by means of a latching pawl (not shown) as described in the aforesaid patent application.

The upper surface 11 of the panel 8 of each deck segment 8 is covered with a durable and structurally sound flooring medium.

Each deck segment 8 is of such a size that it extends across three adjacent guide tracks 6 on each side of the vehicle. The central beam 9 of the deck segment 8 is connected to the middle track 6a of the three on each side and edges 8b (see figure 3) of each deck segment 8 remote from the central supporting beam 9 are each supported by a supplementary beam 10a extending across the vehicle body 1 parallel to the central supporting beam 9 and connected between guide tracks 6 on each side of the middle track 6a. Each supplementary beam 10a is similar in design to the central beam 9 but is not connected to or integral with the deck segment 8.

The central supporting beam 9 is hollow as stated above and has an aperture 9a in which an inner telescoping member (not shown) is fitted as described in our aforementioned European patent application. The inner telescoping member has the end fitment and sliding shoe 10 attached to its end. The deck segment 8 is designed so that it balances about aperture 9a and no significant torsional loads are trasmitted to the inner telescoping member thus limiting the reaction at the sliding shoe/track connection 10,6 and preventing unnecessary friction or jamming during vertical positioning of the deck segment 8.

The panel 8a may be detachable from the supporting beam 9 and replaceable with a different panel having an alternative flooring surface more suited to the cargo type being carried.

An alternative design of the deck segment is shown in figure 4 in which parts corresponding to those of figure 1 are indicated by the same reference numeral. The deck segment 8 is formed as a unitary structure and has a central aperture 12 in which the inner telescoping member (not shown) as used in beam 9 of figure 3 is housed. The deck segment 8 is substantially thicker than that shown in figure 3 and the upper surface has an overhang 8b at each edge to allow the deck segment 8 to be supported by a supplementary beam 10a. This design is provides for added strength and may be constructed from stressed skin segments or segments filled with support or insulating material.

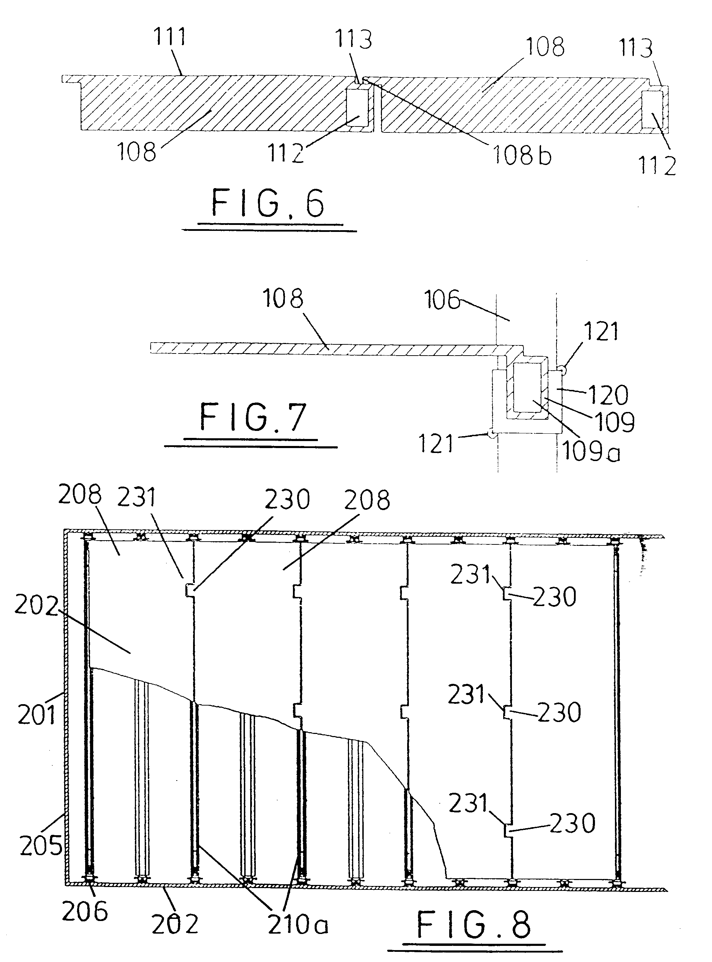

Figures 5 and 6 show further alternative deck segment embodiments. Parts corresponding to those of figures 3 and 4 are indicated by the same reference numerals increased by 100 and are not further described except insofar as they differ from their counterparts in figures 3 and 4.

In figure 5 beam 109 is located at one edge of the underside of deck segment 108. Half of the top surface of the beam width is integrally connected to the deck segment 108 whereas the other half extends beyond the deck 108 to provide stepped ledge 113 on which the corresponding opposite edge 108b of an adjacent deck can be supported when adjacent deck segments are vertically aligned. This arrangement obviates the need for supplementary beams as described in the embodiments of figures 3 and 4.

Figure 6 shows a deck segment 108 of greater depth than that of figure 5. The upper surface 111 of deck panel 108a is stepped to provide a ledge 113 at one edge above part of aperture 112. At the opposite edge of the panel 108a there is an overhang 108b. When two adjacent segments 108 of this kind are vertically aligned the overhanging edge 108b of one segment is supported on the ledge 113 of the adjacent segment 108.

The deck segments shown in figures 5 and 6 will. when loaded, be subjected to torsional moments about apertures 109a or 112. The torsional loading of each segment 108 will be reacted by the sliding shoe bearing against the guide track causing unnecessary friction and jamming of the shoe to the track is likely to occur. Accordingly it is preferable to use an alternative shoe design (shown in figure 7) with the embodiments shown in figures 5 and 6. The sliding shoe 120 has rolling elements 121 mounted on each side diagonally opposite each other. The rolling elements 121 bear against the guide track 106 and significantly reduce the friction and the tendency of the deck segment 108 to jam during vertical positioning. The rolling elements 121 may be ball bearings, wheels, roller bearing or the like.

Referring again to figures 1 and 2, in the unloaded condition the deck segments 8 and supplementary beams 10 are stored in a space below the roof 3 of the vehicle by moving them upwards along the guide tracks 6,6a.

The vehicle body 1 is loaded in a particular sequence as will now be described. First, a portion of the floor 4 at the front end 5 of the vehicle body 1 is loaded and then the two foremost supplementary beams 10a are lowered to a desired height and latched in position. The foremost deck segment 8 is lowered to the same height so that it is supported by the supplementary beams 10a and latched in place. Each subsequent pair of supplementary beams 10a and deck segment 8 are lowered in sequence and loaded after the floor space immediately below that segment had been loaded as the loading operation works towards the rear doors. Unloading of the vehicle is achieved by reversing the sequence with the unloaded supplementary beams 10a and deck segments 8 being stowed in the space under the roof 3.

Figure 8 shows a modified second deck 207 arrangement in which parts corresponding to those of figure 1 are indicated by the same reference numerals increased by 200 and are not further described except insofar as they differ from their counterparts. Deck segments 208 are designed to interlock to prevent sideways movement of one segment 208 relative to its neighbouring segment 208. Each deck segment 208 has three equi-spaced projections 230 on one edge and three recesses 231 on the opposite edge, the recesses 231 being aligned with the projections 230. When adjacent deck segments 208 are vertically aligned in the vehicle body 201 the projections 230 on the edge of a deck segment 208 positively engage in recesses 231 in the adjacent edge of the neighbouring segment 208. By preventing differential side movement between deck segments 208 the strength of a loaded deck is significantly increased as it acts as a unitary shear panel. The interlocked deck enhances the vehicle's overall structural integrity.

The deck segments 208 may be locked relative to each other in alternative ways. For example, one edge of a deck segment 208 may have a plurality of downwardly projecting pins which engage in apertures adjacent the opposite edge of a neighbouring segment. Alternatively the pins may engage in apertures present in the supplementary beams 210. In fact the adjacent edges of neighbouring deck segments 208 may have any co-operating formations such as castellations or serrations. The interlocking mechanism in each case will need to be designed to take into account the flexing of the vehicle body during loading. Such mechanisms will therefore be or spring loaded to allow matting parts to cooperate while the vehicle is flexed to achieve correct alignment of the decks whereupon the spring loaded mechanisms lock into place.

In all embodiments, each deck segment and/or supplementary beam may be furnished with cargo securing equipment such as tie down strapping and loops, and tracks or grooves designed to receive such strapping or other fittings. Furthermore, the segments may be fully or partially apertured, grooved or may support pillars to permit the circulation of air or gas around the cargo in chilled or refrigerated vehicles.

The segments may be thermally insulated and may have sealing strips or elements to permit sealing against the vehicle side walls, the bulkhead and/or the rear doors so that the deck forms a dividing barrier between areas of the vehicle which can then be maintained at different temperatures. For example, the cargo at floor level may be chilled where the cargo on the secondary or upper deck may be refrigerated.

## Claims

1. A cargo support deck (7:207) moveable relative to a supporting structure (1;201) in a substantially vertical direction characterised in that the deck (7;207) comprises a plurality of deck segments (8;108;208) each comprising a support (9;109;209) connected to a deck panel (8a;108a)and each being individually moveable along a guide track (6;206).

2. A cargo support deck according to claim 1, characterised in that each deck segment (8;108;208) has a sliding shoe connector (10;120) designed to engage captively said guide track (6;206).

3. A cargo support beam according to claim 2, characterised in that each sliding shoe connector (10:120) is moveable telescopically with respect to the deck segment (8;108:208).

4. A cargo support deck according to any preceding claim, characterised in that the support is a beam (9:109;209) mounted centrally with respect to the deck panel (8a;108a) along a longitiidinal axis thereof.

5. A cargo support deck according to claim 4, characterised in that there is provided a supplementary beam (10a;210a) designed to support said deck segment (8;108;208) at an edge (8b; 108b) thereof remote from the longitudinal axis, the supplementary beam (10a;210a) being vertically moveable along a guide track (6:206).

6. A cargo support deck according to any one of claims 1 to 3, characterised in that the support is a beam (109) formed at a first edge of the deck panel (108a).

7. A cargo support deck according to claim 6, characterised in that when adjacent first and second deck segments (108) are vertically aligned a second edge (108b) of the first deck segment (108) opposite said first edge is supported by part said second adjacent deck segment (108).

8. A cargo support deck according to any one of claims 4 to 7, characterised in that the beam (9;109;209) is separable from the deck panel (8a;108a;208a).

9. A cargo support deck according to any one of claims 4 to 8, wherein the beam is housed in an aperture (12;112) through the length of the deck segment (8;108).

10. A cargo support deck according to any one of claims 4 to 9, characterised in that the beam is telescopic and the sliding shoe connector is fixed thereto.

11. A cargo support deck according to any one of claims 2 to 10, characterised in that the sliding shoe has torsional reaction bearings.

12. A cargo support deck according to any preceding claim, characterised in that means (230,231) are provided to interlock adjacent deck segments (208) when they are in vertical alignment.

13. A cargo support deck according to any preceding claim, characterised in that the deck segments have apertures or recesses which permit circulation of air or gas around cargo for cooling purposes.

14. A cargo support deck according to any preceding claim, characterised in that the deck segments are partly or fully constructed from a thermally insulated material.
